# EUROPEAN PATENT SPECIFICATION

(11) **EP 4 453 065 B1**
(45) Date of publication and mention of the grant of the patent: **18.11.2026**
(21) Application number: 22856882.0
(22) Date of filing: 13.12.2022
(51) Int. Cl.: C08G 65/26

(54) **SEMI-BATCH ALKYLENE OXIDE POLYMERIZATION PROCESS USING A LEWIS ACID CATALYST**
SEMIBATCH-ALKYLENOXID-POLYMERISATIONSVERFAHREN UNTER VERWENDUNG EINES LEWIS-SÄURE-KATALYSATORS
PROCÉDÉ DE POLYMÉRISATION D'OXYDE D'ALCYLÈNE SEMI-DISCONTINU UTILISANT UN CATALYSEUR TYPE ACIDE DE LEWIS

(30) Priority: 21.12.2021 US 202163291969 P
(43) Date of publication of application: 30.10.2024
(73) Proprietor: Dow Global Technologies LLC, Midland, MI 48674 (US)
(72) Inventor: MARTINEZ, Julibeth M., Lake Jackson, Texas 77566 (US); RAGHURAMAN, Arjun, Lake Jackson, Texas 77566 (US); VILLA, Carlos M., Lake Jackson, Texas 77566 (US); ARORA, Sukaran Singh, Lake Jackson, Texas 77566 (US); MAJUMDER, Ankita, Lake Jackson, Texas 77566 (US)
(74) Representative: Beck Greener LLP
(86) International application number: PCT/US2022/052641
(87) International publication number: WO 2023/121913

(56) References cited:
- WO-A1-2019/055727
- WO-A1-2021/154780
- WO-A1-2021/154783

## Description

This invention pertains to semi-batch processes for polymerizing an alkylene oxide.

Polyethers are made across the globe in very large volumes. They are used for making polyurethanes such as rigid, flexible, semi-flexible or viscoelastic foams, among many other things.

Polyethers can be made by polymerizing an alkylene oxide in the presence of a starter. The starter has one or more functional groups, which are typically hydroxyl, primary amino or secondary amine groups, at which the alkylene oxide engages in a ring-opening reaction. An oxyalkylene unit is thereby added to the chain, producing a new terminal hydroxyl group at which subsequent alkylene oxide molecules can add to extend the polyether chain.

The alkylene oxide polymerization can be performed batch-wise, continuously, or in a semi-batch process. Semi-batch processes are characterized in that the alkylene oxide is fed into the reaction vessel over a period of time under reaction conditions without removing product until the polymerization is completed. Semi-batch are sometimes advantageous because they can produce products having a narrow molecular weight distribution.

The alkylene oxide polymerization reaction is catalyzed. The predominant catalysts are alkali metal hydroxides (especially potassium hydroxide) and the so-called "double metal cyanide" catalysts typified by zinc hexacyanocobaltate complexes. Each of these has advantages and disadvantages. The alkali metal hydroxide catalysts are inexpensive and can be used polymerize both of the two main alkylene oxides used in polyether production (1,2-propylene oxide and ethylene oxide) and so can be used to make a wide range of polyether products. A disadvantage of alkali metal hydroxide catalysts is the product must be neutralized and catalyst residues scrupulously removed. This adds considerable manufacturing costs. Another disadvantage is strongly basic conditions catalyze an isomerization of 1,2-propylene oxide to propenyl alcohol and/or allyl alcohol, each of which can be alkoxylated to produce unwanted monofunctional species.

Double metal cyanide catalysts are useful at very low concentrations, which allows catalyst residues to remain in the product, avoiding neutralization and/or catalyst removal steps and the associated costs. They also do not promote 1,2-propylene oxide isomeration. However, they polymerize ethylene oxide with difficulty; when producing an ethylene oxide-capped polyether it is usually necessary to perform the capping step using an alkali metal catalyst. This negates much of the advantage of using double metal cyanide catalysts.

A third class of alkylene oxide polymerization catalysts is Lewis acids. Lewis acid catalysts have an advantage of promoting both the head-to-head and head-to-tail addition of 1,2-propylene oxide. This permits polyethers that have moderately high primary hydroxyl contents to be made by polymerizing 1,2-propylene oxide. This is an advantage when ethylene oxide is not readily available or when a highly reactive polyol with low hydrophilicity is needed. Lewis acids tend to deactivate rapidly and often catalyze an unwanted reaction of 1,2-propylene oxide to propionaldehyde.

WO 2019/055727, WO 2019/055731, WO 2019/055734 and WO 2019/055740 describe a class of boron, aluminum, indium, bismuth or erbium-containing, fluoroalkyl-substituted Lewis acids for use as alkylene oxide polymerization catalysts. In examples, these patent publications describe producing polyols having molecular weights of up about 1000 at a polymerization temperature of 90°C, with higher molecular weight polyols being produced at a lower polymerization temperature of 55°C. These polymerization temperatures are too low for industrial scale polyether polyol production because the polymerization reaction is highly exothermic and it is impractical to control an industrial scale polymerization plant to such low temperatures.

This invention is an alkylene oxide polymerization process comprising the steps of
a) forming a starting reaction mixture comprising 1) a starter having at least one functional group capable of being oxyalkylated and 2) at least one Lewis acid alkylene oxide polymerization catalyst, the mixture being at a temperature of at least 75°C;
b) while maintaining a temperature of at least 75°C, continuously and simultaneously adding to the starting reaction mixture, in separate streams, 3) at least one alkylene oxide and 4) additional Lewis acid alkylene oxide polymerization catalyst, combining the separate streams with the starting reaction mixture and polymerizing the alkylene oxide to produce a polyether corresponding to a reaction of the at least one alkylene oxide with the starter, wherein step b) is performed without removal of the polyether product; and optionally
c) discontinuing simultaneously adding the alkylene oxide and additional Lewis acid alkylene oxide polymerization catalyst streams;
d) after step c), optionally heating the reaction mixture to at least 75°C to continue polymerizing alkylene oxide that remains in the reaction mixture at the conclusion of step b) and
e) recovering a polyether product.

The process of the invention provides a route to efficiently alkoxylating the starter at industrially acceptable operating temperatures using Lewis acid alkoxylation catalysts as defined in claim 1.

The starter is a compound having one or more functional groups capable of being alkoxylated. Examples of such functional groups include primary, secondary or tertiary hydroxyl groups, primary or secondary amino groups, mercaptans and carboxylic acid groups. Starters having one or more, especially 2 or more, hydroxyl groups and no primary amino, secondary amino, mercaptan or carboxylic acid groups (or other functional groups capable of being alkoxylated) are of particular interest for preparing polyether alcohols useful for polyurethane applications.

The molecular weight of the starter is not critical and can range from 18 (in the case of water) to 10,000 or more g/mol. Molecular weights for purposes of this invention are formula molecular weights for compounds having formula molecular weights of up to 250 g/mol, and number average molecular weights otherwise. Starters of particular interest have molecular weights of 60 g/mol to 1,000 g/mol.

Specific examples of useful hydroxyl-containing starters include allyl alcohol, propenyl alcohol, water, ethylene glycol, diethylene glycol, triethylene glycol, 1,2- and/or 1,3-propylene glycol, dipropylene glycol, tripropylene glycol, penterythritol, erythritol, cyclohexanedimethanol, glycerin, trimethylolpropane, trimethylolethane, triethanolamine, triisopropanolamine, sorbitol and sucrose, as well as alkoxylates of any one or more having number average molecular weights of up to 10,000 g/mol, especially up to 1,000 g/mol.

Especially preferred starters are polyether polyols having 2 to 8 hydroxyl groups and a number average molecular weight of 250 to 1,000 g/mol, especially 300 to 800 g/mol.

The catalyst is a Lewis acid, by which it is meant a chemical compound that can accept an electron pair.

Among the useful Lewis acid catalysts are those represented by the general formula

M(R¹)₁(R²)₁(R³)₁(R⁴)_{0 or 1} _{(I)}

wherein M is boron, aluminum, indium, bismuth or erbium, R¹ is a fluoroalkyl-substituted phenyl group and R² and R³ each are a fluoroalkyl-substituted phenyl group, a fluoro-substituted phenyl group, a chloro-substituted phenyl group, or a fluoro- and chloro-substituted phenyl group. Optional R⁴ is a functional group or functional polymer group. The M in the general formula may exist as a metal salt ion or as an integrally bonded part of the formula. Suitable such catalysts and methods for preparing them are described, for example, in WO 2019/055727, WO 2019/055731, WO 2019/055734 and WO 2019/055740.

The at least one fluoroalkyl substituent of the fluoroalkyl-substituted phenyl group R¹ may be, example, a fluorine-substituted alkyl group having, for example, 1 to 5 carbon atoms. Fluorine-substituted methyl groups are preferred. The alkyl groups contain at least one fluorine substituent and may have any greater number of fluorine substituents, up to being perfluorinated. A preferred fluoroalkyl substituent includes a -CF₃ moiety. In some embodiments the fluoroalkyl substituents are -CF₃.

The fluoroalkyl-substituted phenyl group R¹ can be substituted with 1 to 5 fluoroalkyl groups. The fluoroalkyl groups can occupy any of the positions on the phenyl ring. In some embodiments, the R¹ group is substituted with 2 fluoroalkyl groups, which may be positioned at the 2 and 5 carbons or the 3 and 5 carbons. In specific embodiments, the fluoroalkyl-substituted phenyl group R¹ is 2,5- or 3,5-bis(trifluoromethyl)phenyl.

R¹, may be substituted to include other groups in addition to the at least one fluoroalkyl group, *e.g.,* a fluorine atom and/or chlorine atom that replaces at least one hydrogen of the phenyl group.

R² and R³, if a fluoroalkyl-substituted phenyl group, is as described with regard to R¹. R² and R³ may be the same as R¹. Alternatively, at least one of R² and R³ is different than R¹. R² and/or R³ may be fluoro-substituted and/or chloro-substituted, instead of or in addition to being fluoroalkyl-substituted. The phenyl group R² or R³ may be substituted with 1 to 5 fluoroalkyl, fluorine and/or chlorine atoms. Examples of R² and R³ groups include, in addition to 2,5- or 3,5-bis(trifluoromethyl)phenyl,

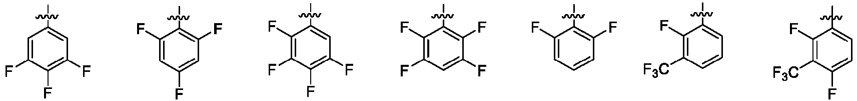

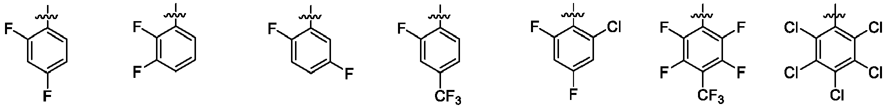

With respect to optional R⁴, the functional group or functional polymer group may be a Lewis base that forms a complex with the Lewis acid catalyst). By "functional group or functional polymer group" it is meant a molecule that contains at least one of the following: water, an alcohol group, an alkoxy group (examples include a linear or branched ether and a cyclic ether), a ketone group, an ester group, an organosilane group, an organosiloxane group, an oxime group, and substituted analogs of any of such groups. Each of the molecules containing alcohol, linear or branched ether, cyclic ether, ketone, ester, alkoxy, organosilane, organosiloxane, and oxime groups may include 2 to 20 carbon atoms, 2 to 12 carbon atoms, 2 to 8 carbon atoms, or 3 to 6 carbon atoms.

In some embodiments, the functional group or functional polymer group has the formula (YOH)ₙ, wherein O is O oxygen, H is hydrogen, Y is H or an alkyl group, and n is an integer (*e.g*., an integer from 1 to 100).

Other suitable R⁴ groups include diethyl ether, cyclopentyl methyl ether, methyl *tertiary-*butyl ether, tetrahydrofuran, tetrahydropyran, 1,4-dioxane, acetone, methyl isopropyl ketone, isopropyl acetate, and isobutyl acetate.

Examples of suitable Lewis acid catalysts as described above include (2,5-bis(trifluoromethyl)phenyl)bis(3,5-bis(trifluoromethyl) phenyl)borane, bis(2,5-bis(trifluoromethyl)phenyl)(3,5-bis(trifluoromethyl) phenyl)borane, bis(3,5-bis(trifluoromethyl)phenyl)(2,3,5,6-tetrafluoro-4-(trifluoromethyl) phenyl)borane, bis(3,5-bis(trifluoromethyl)phenyl)(pentachlorophenyl)borane, and the tetrahydrofuran (THF) adduct of bis(3,5-bis(trifluoromethyl)phenyl)(2,4,6-trifluorophenyl)borane. Bis(3,5-bis(trifluoromethyl)phenyl)(2,4,6-trifluorophenyl)borane and adducts thereof such as the THF adduct thereof are of particular interest herein because they tend to deactivate more rapidly at elevated temperatures than many of the other compounds represented by structure (I) above.

The alkylene oxide is one or more monoepoxide compounds such as ethylene oxide, 1,2-propylene oxide, 1,2- or 2,3-butylene oxide, 1,2-hexene oxide, styrene oxide, cyclohexane oxide, and the like. Any of these may be the only alkylene oxide polymerized in the process. Mixtures of any two or more can be polymerized if desired. Two or more alkylene oxides may be polymerized sequentially in the process, in any order. In some embodiments, ethylene oxide, 1,2-propylene oxide or 1,2-butylene oxide are homopolymerized. In other embodiments, 1,2-propylene oxide is randomly polymerized with ethylene oxide and/or 1,2-butylene oxide by adding a mixture of the oxides during step b). In other embodiments, ethylene oxide is randomly polymerized with 1,2-butylene oxide by adding a mixture of the oxides during step b). In still other embodiments, block copolymers of 1,2-propylene oxide and ethylene oxide or 1,2-butylene oxide, or block copolymers of ethylene oxide and 1,2-butylene oxide, are prepared by adding the oxides sequentially in step b) or by performing step b) multiple times with the different oxides being used in two or more of the occurrences of step b).

The process of the invention is of the type commonly referred to as a "semi-batch" process in which a starting reaction mixture is formed and reaction conditions established, and additional components are added to and combined with the starting reaction mixture under reaction conditions, which preferably are steady-state conditions. In this case, the starting reaction mixture includes at least the starter and Lewis acid alkylene oxide polymerization catalyst, the additional components include separately added alkylene oxide and additional Lewis acid alkylene oxide polymerization catalyst, and the reaction conditions include a temperature of at least 100°C. The pressure may be subatmospheric, atmospheric or super atmospheric, with super atmospheric pressures being generally preferred.

A starting reaction mixture comprising the starter and Lewis acid alkylene oxide polymerization catalyst is formed in step a) of the process and brought to a temperature of at least 75°C. This can be done by mixing the components in any order. The components can be heated before, during or after mixing them to form the starting reaction mixture. The temperature may be at least 90°C, at least 100°C, 110°C, at least 115°C or at least 120°C. In some embodiments, the temperature is up to 180°C, up to 150°C or up to 140°C.

The catalyst may be dissolved in a suitable solvent to facilitate forming the starting reaction mixture. This is generally preferred when the catalyst is a solid or highly viscous under the conditions at which it is added to the reaction. Preferred solvents include starter compounds as described before including, for example allyl alcohol, propenyl alcohol, water, ethylene glycol, diethylene glycol, triethylene glycol, 1,2- and/or 1,3-propylene glycol, dipropylene glycol, tripropylene glycol, penterythritol, erythritol, cyclohexanedimethanol, glycerin, and 1,6-hexanediol, as well as alkoxylates of any one or more having number average molecular weights of up to 10,000 g/mol, especially up to 1,000 g/mol or up to 500 g/mol. Other useful solvents include monoalcohols such as 1-butanol, 1-hexanol, 1-octanol, 1-decanol, polyether monols having number average molecular weights of up to 10,000 g/mol, especially up to 1,000 g/mol or up to 500 g/mol, hydrocarbons such as toluene, various glycol mono- and di-ethers and various glycol mono- and diesters. A catalyst solution may contain, for example 5 to 50%, 10 to 50% or 10 to 30% by weight active catalyst.

The amount of Lewis acid alkylene oxide polymerization catalyst combined with the starter to form the starting reaction mixture, may be, for example, at least 50, at least 100, at least 200, at least 400, or at least 500 parts by weight per million parts by weight starter, and may be, for example, up to 5000, up to 3000, up to 2000, up to 1500 or up to 1000 parts by weight per million parts by weight of the starter.

The starting reaction mixture may contain some initial quantity of alkylene oxide prior to the start of step b), although the presence of such an initial quantity of alkylene oxide is optional and the starting reaction mixture may contain no alkylene oxide prior to the start of step b). If an alkylene oxide is present in the starting reaction mixture prior to step b), its mass is preferably no greater than that of the starter, and more preferably is no more than one-half or one-quarter that of the starter.

In step b) of the process, separate streams of alkylene oxide and additional Lewis acid alkylene oxide polymerization catalyst are added to the reaction mixture and combined with it. The separate streams are added continuously and simultaneously. The beginning of step b) coincides with the point in time at which the separate alkylene oxide and addition Lewis acid alkylene oxide polymerization catalysts streams begin to be simultaneously added. Step b) ends when the simultaneous addition ceases. The addition of these streams is performed while maintaining the temperature at least 75°C. The temperature during this step can be as described above with respect to the starting reaction mixture. As before, the pressure can be subatmospheric, atmospheric or superatmospheric. The foregoing temperature and pressure conditions represent polymerization conditions; therefore the alkylene oxide will at least partially polymerize during step b) to produce a polyether.

In a step b), the alkylene oxide and Lewis acid alkylene oxide polymerization catalyst may be added over a time period of, for example, 10 minutes to 40 hours or more. A preferred time period is at least 30 minutes, at least 60 minutes or at least 90 minutes. The time period of addition in step b) in some embodiments is up to 20 hours, up to 15 hours, up to 8 hours, up to 6 hours, up to 4 hours or up to 3 hours. If step b) is performed multiple times, the time of addition each time may be as stated above.

In some embodiments, the rate of addition of the streams during any step b) is selected so as to maintain the amount of unreacted alkylene oxide (URO) in the reaction mixture at 10% by weight or less, preferably 6% less, 4% or less or 2% or less, based on the total weight of the reaction mixture any the point in time of the measurement. In especially preferred embodiments, the URO is maintained between 0.25 and 4%, especially between 0.25 and 2% at all times during step b) of the process.

In a step b), the relative rates of addition of the streams in some embodiments are such that the at least one alkylene oxide is added at a rate Rₐₒ g/minute and the at least one Lewis acid alkylene oxide polymerization catalyst is added at a rate of 0.0001 to 0.01 Rₐₒ (on an active catalyst basis). The at least one Lewis acid alkylene oxide polymerization catalyst may be added, for example, at a rate of at least 0.005 Rₐₒ, at least 0.0025 Rₐₒ, at least 0.004 Rₐₒ or at least 0.005 Rₐₒ, and may be added, for example, at a rate of up to 0.0025 Rₐₒ, 0.0015 Rₐₒ, up to 0.001 Rₐₒ, or up to 0.0008 Rₐₒ. These relative addition rates are applicable to both the average relative rates of addition during the entirely of step b), and also to the instantaneous relative rate of addition at any particular time during step b). The relative rates of addition of the streams may or may not be held constant during a step b); therefore, the average relative rate of addition may differ from any instantaneous relative rate of addition.

The total amount of Lewis acid alkylene oxide polymerization catalyst added to the reaction mixture during the process may be, for example, 50 to 3000 or 200 to 3000, parts by weight per million parts by weight of the combined weight of the starter and the at least one alkylene oxide. The weight of the Lewis acid alkylene oxide polymerization catalyst includes that added in step a), each step b), or otherewise. The weight of the starter and at least one alkylene oxide each include all starter and alkylene oxide charged to the reaction mixture during the process, including that added in step a) and each step b), or otherwise.

Additional starter may be added during any step b), if desired.

After step b) (or after each step b), if more than one is performed), the simultaneous addition of the alkylene oxide and Lewis acid alkylene oxide polymerization catalyst streams is discontinued. It is within the scope of the invention to continue to add one or both of these steams separately after any step b).

After step c), the reaction mixture is optionally heated (step d)) to at least 75°C to continue polymerizing alkylene oxide that remains in the reaction mixture at the conclusion of step b). Temperature and pressure conditions as described with respect to step b) are applicable to this step. It is preferred to perform this optional heating step until the URO is reduced to no greater than 1% by weight, more preferably no greater than 0.5% by weight. It is preferred not to add any additional catalyst, alkylene oxide or starter during any step d).

As discussed above, steps b) and c) may be performed multiple times, optionally and preferably with a step d) interposed between a step c) and any subsequent step b). As stated before, the alkylene oxide(s) used in different steps b) may be the same or different. Multiple steps d) can be performed when multiple steps b) and c) are performed.

The process produces a polyether product formed by polymerizing the alkylene oxide(s) onto the starter(s). The polyether product has a higher molecular weight than the starter(s). The polyether product may have a number average molecular weight of, for example, 800 g/mol to 12,000 g/mol or more (by gel permeation chromatography (GPC) against polyether standards). In specific embodiments, the polyether product may have a number average molecular weight of at least 1000, at least 1200, at least 1500, at least 1800 or at least 2000 g/mol, and, for example, up to 8,000, up to 6,000 or up to 5,000 g/mol. The polyether product preferably has at least one, more preferably 2 to 8, hydroxyl groups and in such cases may have a hydroxyl equivalent weight of at least 200, at least 330, at least 400, at least 500, at least 750 or at least 900 and up to 6,000, up to 4,000, up to 3,000 or up to 2500 g/equivalent (by titration to determine the corresponding hydroxyl number in mg KOH/g according to ASTM D4274-21 or equivalent followed by conversion to equivalent weight using the relationship equivalent weight = 56,100 ÷ hydroxyl number). The polyether product may have a polydispersity (weight average molecular weight divided by number average molecular weight, in each case determined by GPC against polyether standards), of no greater than 1.175. The polydispersity may be, for example, 1.00 to 1.16, 1.00 to 1.12, 1.00 to 1.10, 1.00 to 1.08 or 1.00 to 1.06.

The number average molecular weight of the polyether product may be, for example, 2 to 200 times that of the starter(s). In specific embodiments, the number average molecular weight of the polyether product may be up to 100, up to 50, up to 25, up to 15, or up to 10 times that of the starter.

The product is recovered by removing it from the reaction vessel(s) upon the completion of the polymerization. Various treatment steps may be performed before or after the polyether product is recovered. Unreacted alkylene oxide and/or starter may be separated from the product. Catalyst residues may be separated from the product. Volatile residues and/or by-products may be removed. One or more antioxidants or other preservatives may be added to the product. The product may be blended with one or more other polyethers, with water, and/or with other materials as may be useful in a downstream application in which the polyether is to be used.

In some embodiments, the polyether product is a homopolymer of 1,2-propylene oxide in which at least 40%, or at least 45% of the hydroxyl groups of the polyether product are primary. In such embodiments, up to 85%, up to 80%, up to 70% or up to 65% of the hydroxyl groups may be primary. Primary hydroxyl content can be determined by ⁹F NMR analysis of a trifluoroacetic anhydride derivative of the polyol.

The polyether product preferably contains at most small quantities of acetals. Acetals can be formed in some alkylene oxide polymerization processes through the formation and subsequent reaction of aldehyde-containing species as described, for example, by Raghuraman et al. in Macromolecules 2016, 49(18), pp. 6790-6798. The hydroxyl-containing polymer of 1,2-propylene oxide preferably contains at most 5 mole-% acetals, and more preferably no more than 2 mole-%, no more than 1.5 mole-% or no more than 1 mole-% thereof, based on the moles of carbon atoms in the polymer. Acetal content can be determined by inverse-gated ¹³C NMR spectroscopy. A suitable procedure is as follows: Samples are prepared in 10-mm NMR tubes as ~ 90% solutions in DMSO-d6. ¹³C NMR data is acquired using a Bruker Avance 400-MHz spectrometer equipped with a cryoprobe or equivalent apparatus, using at least 64 transient scans and a 30-second relaxation delay (optimized for quantitative measurements). The acquisition is carried out using spectral width of 25000 Hz and a file size of 65K data points. Relative moles of acetal species are measured by integrating the area under resonances from acetal carbons. Mole% acetal= 100% × relative moles of acetal carbon ÷ sum of relative moles of all carbon species in the spectrum.

The polyether product is useful in making polyurethanes as well as for other uses for which other polyethers of like molecular weight are hydroxyl functionality are suitable. The polyether product can be reacted with a polyisocyanate to produce a wide variety of polyurethane polymers including, for example, rigid polyurethane and/or polyurethane-isocyanurate foam; flexible polyurethane foam; viscoelastic polyurethane foam; microcellular polyurethane foam; non-cellular polyurethane elastomers; non-cellular structural polymers, polyurethane coatings, polyurethane sealants, polyurethane adhesives, and the like.

The following examples are provided to illustrate the invention but are not intended to limit the scope thereof. All parts and percentages are by weight unless otherwise indicated.

### Examples 1-3 and Comparative Samples A and B

In the following examples, the catalyst in all cases is a tetrahydrofuran adduct of bis(3,5-bis(trifluoromethyl)phenyl)(2,4,6-trifluorophenyl)borane. This catalyst corresponds to Catalyst 6 of WO 2019/055727 and is suitably prepared in the manner described with regard to Catalyst 6 of WO 2019/055727. The catalyst solution contains 10 weight percent of this catalyst in 90 weight percent of a 425 Mₙ poly(propylene oxide) diol.

The thermal stability of this catalyst is evaluated as follows: Poly(propylene glycol) (425 g/mol) is sparged with dry nitrogen for 18 hours at 110°C. In an oxygen-free wet box, degassed water (50 µL) is added to 10 mL of the poly(propylene glycol) in a 20 mL glass vial. 664 µL of resulting wet poly(propylene glycol) is combined wih 35 mg of the catalyst in a 8 mL glass vial and stirred vigorously for 15 minutes. The solution is transferred to a 5 mm NMR tube that contains a sealed glass capillary which holds a 10 vol% solution of C₆F₆ in toluene-*d*₈. The NMR tube is capped, sealed with electrical tape heated to 60°C and maintained at that temperature. ¹⁹F NMR spectra are collected on Varian 400-MR and Bruker Avance 500 NMR spectrometers, using standard pulse sequences, with ns = 32, d1 = 5 s. Spectra are collected every 15 minutes for 15 hours. Integrations are normalized to the C₆F₆ internal standard. The decomposition is calculated from the integrals of the signals corresponding to the *ortho*-fluorine atoms of the bis(3,5-bis(trifluoromethyl)phenyl)(2,4,6-trifluorophenyl)borane tetrahydrofuran complex. The amount of catalyst decomposition after 15 hours at 60°C is about 2.9% by weight.

When this test is repeated at 90°C, 14.5% of the catalyst decomposes after only 4 hours and 39.6% decomposes after 15 hours. When again repeated at 120°C, 96.8% of the catalyst decomposes after 4 hours, with complete decomposition being seen after 15 hours.
Comparative Sample A: 270.48 g of a 700 Mₙ poly(propylene oxide) triol starter is charged to a 1.88 L stainless steel reactor along with 3.62 g of the catalyst solution. This corresponds to an initial catalyst concentration of 1338 ppm with respect to the product, which is taken as the combined weight of starter and added alkylene oxide. The reactor temperature is brought to 120°C. At that temperatures, 1,2-propylene oxide is then added to the reactor at a constant feed rate of 1.66 g (2 mL) per minute. The concentration of unreacted 1,2-propylene oxide (URO) is continuously monitored. The URO reaches 10% by weight of the reaction mixture after 75 minutes of 1,2-propylene oxide addition. This URO value indicates that essentially none of the added 1,2-propylene oxide has polymerized onto the starter, presumably because the catalyst has deactivated under these temperature conditions. The 1,2-propylene oxide feed is discontinued at this point while maintaining the reaction temperature at 120°C. The URO does not decline, further indicating the catalyst has become deactivated.
Comparative Sample B: 269.54 g of the starter described in Comparative Sample A is charged to the same reactor. No initial charge of catalyst is made. The reactor contents are brought to 120°C. 1,2-propylene oxide is fed to the reactor at a constant rate of 1.66 g/min (2 mL/min), while maintaining the reactor temperature at 120°C. Starting at the same time, the catalyst solution is fed to the reactor as a separate stream at the rate of 0.018 g/min. The feed ratios are such as to provide and maintain a catalyst loading of approximately 1084 parts per million based on the amount of added 1,2-propylene oxide. The total amount of added catalyst after 21 minutes is approximately 124 parts per million based on the combined weight of starter and added 1,2-propylene oxide. After 21 minutes the URO reaches 10 weight-%, indicating that essentially none of the 1,2-propylene oxide has polymerized.

This experiment demonstrates that continuous feeding of the catalyst alone is insufficient in a semi-batch process at 120°C.
Example 1: 260.54 g of the starter and 1.57 g of the catalyst solution are charged to the same reactor as described in the Comparative Samples. These amounts correspond to about 602 parts per million catalyst based on starter weight, on an active basis. The reaction mixture is brought to 120°C. While maintaining that temperature, 1,2-propylene oxide is fed into the reactor at the rate of 1.66 g/minute (2 mL/minute). Beginning at the same time, the catalyst solution is fed into the reactor as a separate stream, at the rate of 0.01 g/minute (0.001 g/minute active catalyst). This addition rate maintains the cumulative amount of added catalyst at about 602 parts per million at all times during the addition of the feed streams. The 1,2-propylene oxide and catalyst streams are continued for about 202 minutes, during which time 335.94 g of 1,2-propylene oxide (Rₐₒ = 1.663 g/min) and 2.04 g of catalyst solution (0.204 g active catalyst, addition rate = 0.0006 Rₐₒ) are fed into the reactor. URO remains at or below 2% during the entire time the 1,2-propylene oxide and catalyst feeds are continued, indicating that the 1,2-propylene oxide is polymerizing at approximately the rate at which it is fed into the reactor.

Upon completion of the feeds, the reactor is kept at 120°C to allow for complete digestion of the remaining unreacted oxide, and the product is recovered by devolatilizing it and removing it from the reactor. The total amount of added catalyst is about 603 ppm with respect to the weight of the final product mass. The product has a number average molecular weight of approximately 1600 g/mol, which represents the target molecular weight for this polymerization.

As this experiment demonstrates, the addition of an additional charge of catalyst coupled with a continuous addition of fresh catalyst simultaneously and separately from the 1,2-propylene oxide addition achieves rapid and complete polymerization even at the 120°C operating temperature.
Example 2: 265.60 g of the starter and 1.60 g of the catalyst solution are charged to the reactor. This corresponds to an initial catalyst concentration of about 600 ppm. The reaction mixture is brought to 120°C. While maintaining that temperature, 1,2-propylene oxide is fed into the reactor at the rate of 1.66 g/minute (2 mL/minute). Beginning at the same time, the catalyst solution is fed into the reactor as a separate stream, at the rate of 0.01 g/minute (0.001 g/minute active catalyst, addition rate = 0.0006 Rₐₒ). This addition rate maintains the cumulative amount of added catalyst at about 602 parts per million at all times during the addition of the feed streams. Both feeds are continued for 96.5 minutes, as which point 160.19 grams of 1,2-propylene oxide and 0.097 g of catalyst have been fed to the reactor. The URO does not exceed 2% during the entire feed period.

The 1,2-propylene oxide and catalyst feeds are stopped for 10 minutes while retaining the reactor temperature at 120°C, then continued at their previous respective rates for 107 addition minutes. URO is below 1% during this second feed period.

Upon completion of the feeds, the reactor is kept at 120°C to allow for complete digestion of the remaining unreacted oxide, and the product is recovered by devolatilizing it and removing it from the reactor. The cumulative amount of added catalyst amounts to about 602 parts per million based on the weight of starter plus added 1,2-propylene oxide. The product has a number average molecular weight of approximately 1600 g/mol, which represents the target molecular weight for this polymerization.

Again, the addition of an additional charge of catalyst coupled with a continuous addition of fresh catalyst simultaneously and separately from the 1,2-propylene oxide addition achieves rapid and complete polymerization at the 120°C operating temperature.
Example 3: 260.54 g of the starter and 1.63 g of the catalyst solution are charged to the same reactor. These amounts correspond to about 602 parts per million catalyst based on initiator weight. The reaction mixture is brought to 120°C. While maintaining that temperature, a 2:1 by weight mixture of 1,2-propylene oxide and butylene oxide is fed into the reactor at the rate of about 1.64 g/minute (2 mL/minute). Beginning at the same time, the catalyst solution is fed into the reactor as a separate stream, at the rate of 0.01 g/minute (0.001 g/minute). This addition rate maintains the cumulative amount of added catalyst at about 600 parts per million at all times during the addition of the feed streams. The alkylene oxide and catalyst streams are continued for about 209 minutes, during which time 343.2 g of the alkylene oxide mixture and 2.09 g of catalyst solution are fed into the reactor. The catalyst addition rate is 0.0006 Rₐₒ on an active basis. URO remains at or below 2% during the entire time the alkylene oxide and catalyst feeds are continued, indicating that the 1,2-propylene oxide and butylene oxide are polymerizing at approximately the rate at which they is fed into the reactor.

Upon completion of the feeds, the reactor is kept at 120°C to allow for complete digestion of the remaining unreacted oxides, and the product is recovered by devolatilizing it and removing it from the reactor. The total amount of added catalyst is about 600 ppm with respect to the weight of the final product mass. The product has a number average molecular weight of approximately 1600 g/mol, which represents the target molecular weight for this polymerization.

As this experiment demonstrates, similar results are obtained when polymerizing a mixture of 1,2-propylene oxide and butylene oxide. The low URO values seen during the course of the reaction show that the catalyst effectively catalyzes the butylene oxide polymerization as well as 1,2-propylene oxide polymerization, evidencing that the process of the invention will be effective in homopolymerizing butylene oxide.

## Claims

1. An alkylene oxide polymerization process comprising the steps of
a) forming a starting reaction mixture comprising 1) a starter having at least one functional group capable of being oxyalkylated and 2) at least one Lewis acid alkylene oxide polymerization catalyst, the mixture being at a temperature of at least 75°C;
b) while maintaining a temperature of at least 75°C, continuously and simultaneously adding to the starting reaction mixture, in separate streams, 3) at least one alkylene oxide and 4) additional Lewis acid alkylene oxide polymerization catalyst, combining the separate streams with the starting reaction mixture and polymerizing the alkylene oxide to produce a polyether corresponding to a reaction of the at least one alkylene oxide with the starter, wherein step b) is performed without removal of the polyether product; and optionally
c) discontinuing simultaneously adding the alkylene oxide and additional Lewis acid alkylene oxide polymerization catalyst streams;
d) after step c), optionally heating the reaction mixture to at least 75°C to continue polymerizing alkylene oxide that remains in the reaction mixture at the conclusion of step b) and
e) recovering a polyether product;
wherein the at least one Lewis acid alkylene oxide polymerization catalyst includes at least one compound represented by the structure:
M(R¹)₁(R²)₁(R³)₁(R⁴)_{0 or 1}
wherein M is boron, aluminum, indium, bismuth or erbium, R¹ is a fluoroalkyl-substituted phenyl group, R² and R³ each are a fluoroalkyl-substituted phenyl group, a fluoro-substituted phenyl group, a chloro-substituted phenyl group, or a fluoro- and chloro-substituted phenyl group, and R⁴ is a functional group or functional polymer group.

2. The alkylene oxide polymerization process of claim 1, wherein R¹, R² and R³ are not all the same.

3. The alkylene oxide polymerization process of claim 1, wherein R¹, R² and R³ are all the same.

4. The alkylene oxide polymerization process of any claim wherein the reaction mixture formed in step a) is formed by combining the starter with 50 to 2000 parts by weight of the at least one Lewis acid alkylene oxide polymerization catalyst per million parts by weight of the starter.

5. The alkylene oxide polymerization process of any preceding claim wherein the reaction mixture formed in step a) is formed by combining the starter with 100 to 1000 parts by weight of the at least one Lewis acid alkylene oxide polymerization catalyst per million parts of the combined weight of the starter and all alkylene oxide added to the reaction mixture during the alkylene oxide polymerization process.

6. The alkylene oxide polymerization process of any preceding claim wherein during step b) the at least one alkylene oxide is added at a rate Rₐₒ g/minute and the at least one Lewis acid alkylene oxide polymerization catalyst is added at a rate of 0.0001 to 0.001 Rₐₒ.

7. The alkylene oxide polymerization process of any preceding claim wherein the amount of the at least one Lewis acid alkylene oxide polymerization catalyst added to the reaction mixture in steps a) and b) is 50 to 1000 parts by weight per million parts by weight of the combined weight of the starter and the at least one alkylene oxide.

8. The alkylene oxide polymerization process of any preceding claim wherein steps b) and c) are repeated.

9. The alkylene oxide polymerization process of any preceding claim wherein step b) is performed in two or more stages, wherein a first alkylene oxide is added in a first stage of step b), and a different alkylene oxide is added in a subsequent stage of step b).

## Patentansprüche

1. Alkylenoxid-Polymerisationsprozess, umfassend die Schritte
a) Ausbilden eines Ausgangsreaktionsgemisches, umfassend 1) einen Starter, der mindestens eine funktionelle Gruppe aufweist, die in der Lage ist, oxyalkyliert zu werden, und 2) mindestens einen Lewis-Säure-Alkylenoxid-Polymerisationskatalysator, wobei das Gemisch auf einer Temperatur von mindestens 75 °C ist;
b) unter Aufrechterhaltung einer Temperatur von mindestens 75 °C, kontinuierliches und gleichzeitiges Zugeben zu dem Ausgangsreaktionsgemisch, in getrennten Strömen, von 3) mindestens einem Alkylenoxid und 4) zusätzlichem Lewis-Säure-Alkylenoxid-Polymerisationskatalysator, Vereinigen der getrennten Ströme mit dem Ausgangsreaktionsgemisch und Polymerisieren des Alkylenoxids, um einen Polyether zu produzieren, der einer Reaktion des mindestens einen Alkylenoxids mit dem Starter entspricht, wobei Schritt b) ohne eine Entfernung des Polyetherprodukts durchgeführt wird; und optional
c) gleichzeitiges Beenden des Zugebens der Alkylenoxid- und zusätzlichen Lewis-Säure-Alkylenoxid-Polymerisationskatalysatorströme;
d) nach Schritt c), gegebenenfalls Erhitzen des Reaktionsgemisches auf mindestens 75 °C, um Alkylenoxid weiter zu polymerisieren, das bei der Beendigung von Schritt b) in dem Reaktionsgemisch verbleibt und
e) Gewinnen eines Polyetherprodukts;
wobei der mindestens eine Lewis-Säure-Alkylenoxid-Polymerisationskatalysator mindestens eine Verbindung einschließt, dargestellt durch die Struktur:
M(R¹)₁(R²)₁(R³)₁(R⁴)_{0 oder 1}
wobei M Bor, Aluminium, Indium, Wismut oder Erbium ist, R¹ eine fluoralkylsubstituierte Phenylgruppe ist, R² und R³ jeweils eine fluoralkylsubstituierte Phenylgruppe, eine fluorsubstituierte Phenylgruppe, eine chlorsubstituierte Phenylgruppe oder eine fluor- und chlorsubstituierte Phenylgruppe sind und R⁴ eine funktionelle Gruppe oder eine funktionelle Polymergruppe ist.

2. Alkylenoxid-Polymerisationsprozess nach Anspruch 1, wobei R¹, R² und R³ nicht alle gleich sind.

3. Alkylenoxid-Polymerisationsprozess nach Anspruch 1, wobei R¹, R² und R³ alle gleich sind.

4. Alkylenoxid-Polymerisationsprozess nach einem der Ansprüche, wobei das Reaktionsgemisch, das in Schritt a) ausgebildet wird, durch Kombinieren des Starters mit 50 bis 2000 Gewichtsteilen des mindestens einen Lewis-Säure-Alkylenoxid-Polymerisationskatalysators pro Million Gewichtsteile des Starters ausgebildet wird.

5. Alkylenoxid-Polymerisationsprozess nach einem der vorstehenden Ansprüche, wobei das Reaktionsgemisch, das in Schritt a) ausgebildet wird, durch Kombinieren des Starters mit 100 bis 1000 Gewichtsteilen des mindestens einen Lewis-Säure-Alkylenoxid-Polymerisationskatalysators pro Million Teile des kombinierten Gewichts des Starters und des gesamten Alkylenoxids, das dem Reaktionsgemisch während des Alkylenoxid-Polymerisationsprozesses zugegeben wird, ausgebildet wird.

6. Alkylenoxid-Polymerisationsprozess nach einem der vorstehenden Ansprüche, wobei während Schritt b) das mindestens eine Alkylenoxid mit einer Rate Rₐₒ g/Minute zugegeben wird und der mindestens eine Lewis-Säure-Alkylenoxid-Polymerisationskatalysator mit einer Rate von 0,0001 bis 0,001 Rₐₒ zugegeben wird.

7. Alkylenoxid-Polymerisationsprozess nach einem der vorstehenden Ansprüche, wobei die Menge des mindestens einen Lewis-Säure-Alkylenoxid-Polymerisationskatalysators, der dem Reaktionsgemisch in den Schritten a) und b) zugegeben wird, 50 bis 1000 Gewichtsteile pro Million Gewichtsteile des kombinierten Gewichts des Starters und des mindestens einen Alkylenoxids beträgt.

8. Alkylenoxid-Polymerisationsprozess nach einem der vorstehenden Ansprüche, wobei die Schritte b) und c) wiederholt werden.

9. Alkylenoxid-Polymerisationsprozess nach einem der vorstehenden Ansprüche, wobei Schritt b) in zwei oder mehr Stufen durchgeführt wird, wobei ein erstes Alkylenoxid in einer ersten Stufe von Schritt b) zugegeben wird und ein anderes Alkylenoxid in einer nachfolgenden Stufe von Schritt b) zugegeben wird.

## Revendications

1. Procédé de polymérisation d'oxyde d'alkylène comprenant les étapes consistant à
a) former un mélange réactionnel de départ comprenant 1) un amorceur ayant au moins un groupe fonctionnel capable d'être oxyalkylé et 2) au moins un catalyseur de polymérisation d'oxyde d'alkylène de type acide de Lewis, le mélange étant à une température d'au moins 75 °C ;
b) tout en maintenant une température d'au moins 75 °C, ajouter en continu et simultanément au mélange réactionnel de départ, dans des courants séparés, 3) au moins un oxyde d'alkylène et 4) un catalyseur supplémentaire de polymérisation d'oxyde d'alkylène de type acide de Lewis, combiner les courants séparés avec le mélange réactionnel de départ et polymériser l'oxyde d'alkylène afin de produire un polyéther correspondant à une réaction de l'au moins un oxyde d'alkylène avec l'amorceur, dans lequel l'étape b) est effectuée sans retrait du produit polyéther ; et éventuellement
c) interrompre simultanément l'ajout des courants d'oxyde d'alkylène et de catalyseur supplémentaire de polymérisation d'oxyde d'alkylène de type acide de Lewis ;
d) après l'étape c), chauffer facultativement le mélange réactionnel à au moins 75 °C pour poursuivre la polymérisation de l'oxyde d'alkylène qui reste dans le mélange réactionnel à l'issue de l'étape b) et
e) récupérer un produit polyéther ;
dans lequel l'au moins un catalyseur de polymérisation d'oxyde d'alkylène de type acide de Lewis comporte au moins un composé représenté par la structure :
M(R¹)₁(R²)₁(R³)₁(R⁴)_{0 ou 1}
dans lequel M est bore, aluminium, indium, bismuth ou erbium, R¹ est un groupe phényle substitué par fluoroalkyle, R² et R³ sont chacun un groupe phényle substitué par fluoroalkyle, un groupe phényle substitué par fluor, un groupe phényle substitué par chlore, ou un groupe phényle substitué par fluor et chlore, et R⁴ est un groupe fonctionnel ou un groupe polymère fonctionnel.

2. Procédé de polymérisation d'oxyde d'alkylène selon la revendication 1, dans lequel R¹, R² et R³ ne sont pas tous identiques.

3. Procédé de polymérisation d'oxyde d'alkylène selon la revendication 1, dans lequel R¹, R² et R³ sont tous identiques.

4. Procédé de polymérisation d'oxyde d'alkylène selon l'une quelconque des revendications, dans lequel le mélange réactionnel formé à l'étape a) est formé en combinant l'amorceur avec 50 à 2 000 parties en poids de l'au moins un catalyseur de polymérisation d'oxyde d'alkylène de type acide de Lewis par million de parties en poids de l'amorceur.

5. Procédé de polymérisation d'oxyde d'alkylène selon l'une quelconque des revendications précédentes, dans lequel le mélange réactionnel formé à l'étape a) est formé en combinant l'amorceur avec 100 à 1 000 parties en poids de l'au moins un catalyseur de polymérisation d'oxyde d'alkylène de type acide de Lewis par million de parties du poids combiné de l'amorceur et de tout l'oxyde d'alkylène ajouté au mélange réactionnel pendant le procédé de polymérisation d'oxyde d'alkylène.

6. Procédé de polymérisation d'oxyde d'alkylène selon l'une quelconque des revendications précédentes, dans lequel, au cours de l'étape b), l'au moins un oxyde d'alkylène est ajouté à une vitesse de Rₐₒ g/minute et l'au moins un catalyseur de polymérisation d'oxyde d'alkylène de type acide de Lewis est ajouté à une vitesse de 0,0001 à 0,001 Rₐₒ.

7. Procédé de polymérisation d'oxyde d'alkylène selon l'une quelconque des revendications précédentes, dans lequel la quantité de l'au moins un catalyseur de polymérisation d'oxyde d'alkylène de type acide de Lewis ajouté au mélange réactionnel aux étapes a) et b) est de 50 à 1 000 parties en poids par million de parties en poids du poids combiné de l'amorceur et de l'au moins un oxyde d'alkylène.

8. Procédé de polymérisation d'oxyde d'alkylène selon l'une quelconque des revendications précédentes, dans lequel les étapes b) et c) sont répétées.

9. Procédé de polymérisation d'oxyde d'alkylène selon l'une quelconque des revendications précédentes, dans lequel l'étape b) est effectuée en deux stades ou plus, dans lequel un premier oxyde d'alkylène est ajouté dans un premier stade de l'étape b), et un oxyde d'alkylène différent est ajouté dans un stade ultérieur de l'étape b).
